# EUROPÄISCHE PATENTANMELDUNG

(11) **EP 4 575 269 A1**
(43) Veröffentlichungstag der Anmeldung: **25.06.2025**
(21) Anmeldenummer: 23217916.8
(22) Anmeldetag: 19.12.2023
(51) Int. Cl.: F16H 57/04

(54) **PLANETENGETRIEBE MIT ABGEDICHTETEM PITCHROHR**

(71) Anmelder: Flender GmbH, 46395 Bocholt (DE)
(72) Erfinder: LENSING, Volker, 46395 Bocholt (DE); TUESHAUS, Tino, 46395 Bocholt (DE); LENK, Swen, 46395 Bocholt (DE); VENNEMANN, Michael, 46395 Bocholt (DE)
(74) Vertreter: Michalski Hüttermann & Partner Patentanwälte mbB

(57) **Zusammenfassung**

Planetengetriebe 10 für eine über einen Rotor 72 angetriebene Windkraftanlage 70, mit einem einen Ölaufnahmeraum 28 umschließenden Getriebegehäuse 12, mehreren um eine Drehachse A_{D} umlaufenden und miteinander antriebsverbundenen Planetenstufe 14₁, 14₂, einem koaxial innerhalb der beiden Planetenstufen 14₁, 14₂ angeordneten und mit einem Planetenträger 16₁ der ersten Planetenstufe 14₁ drehfest verbundenen Pitchrohr 34, wobei das Pitchrohr 34 gegenüber einer Außenseite des Getriebegehäuses 12 abgedichtet ist und zwischen dem Pitchrohr 34 und jeweils den Planetenstufen 14₁, 14₂ ein Volumenbereich 30 gebildet ist. Zumindest ein Teilabschnitt 32 des Volumenbereichs 30 ist gegenüber dem Ölaufnahmeraum 28 abgedichtet. Auf eine aufwändige, teure und fehleranfällige Ölabfuhrvorrichtung kann verzichtet werden. Das Pitchrohr 34 hat im abgedichteten Volumenbereich 30 keinen Kontakt mehr zum Öl.

## Beschreibung

Die Erfindung betrifft ein Planetengetriebe für eine über einen Rotor angetriebene Windkraftanlage, mit einem einen Ölaufnahmeraum umschließenden Getriebegehäuse, mehreren um eine Drehachse A_{D} umlaufenden und miteinander antriebsverbundenen Planetenstufe, einem koaxial innerhalb der beiden Planetenstufen angeordneten und mit einem Planetenträger der ersten Planetenstufe drehfest verbundenen Pitchrohr, wobei das Pitchrohr gegenüber einer Außenseite des Getriebegehäuses abgedichtet ist und zwischen dem Pitchrohr und jeweils den beiden Planetenstufen ein Volumenbereich gebildet ist.

Der Turmaufbau von Windkraftanlagen beinhaltet u.a. die Rotorwelle, ein Planetengetriebe und einen Generator. Der Turmaufbau hat in der Regel eine geneigte Einbaulage, sodass dieser beispielsweise unter einem Kippwinkel von in etwa 6° zu einer Lotrichtung steht, wobei ein Rotorflansch höher steht als der Generator. Infolge des Kippwinkels steht auch das zentral durch das Planetengetriebe verlaufende Pitchrohr unter dieser winkligen Anstellung, so dass das Getriebeöl entlang der Außenseite des Pitchrohres in Richtung Generator läuft und sich dort vor der abgedichteten Gehäusedurchführung staut. Ein Abführen des sich dort sammelnden Öl ist schwierig und in manchen Fällen sogar nicht möglich. Ein Abführen des Öls ist aber insofern nötig, als dass das Öl dort verkochen und damit verkoken kann und dadurch es zu einer Schädigung der Strukturen kommen kann.

Herkömmlich ist bei gewissen Getriebekonfigurationen in diesem Bereich eine Bohrung vorgesehen, über die das Öl zumindest weitestgehend abfließen und somit die Abdichtung vor Überhitzung und Beschädigung schützen kann. Auch das Abführen des Öls am tiefer liegenden Ende des Pitchrohrs angesichts des sich drehenden Generatorrotors stellt sich als schwierig dar. Bei geänderten Getriebekonfigurationen kann die Bohrung nicht mehr in dem Bereich des sich sammelnden Öls angebracht werden, so dass ein Bedürfnis besteht, das Öl nicht mehr in diesem Bereich gelangen zu lassen.

Die Aufgabe besteht darin Maßnahmen aufzuzeigen, mit denen eine Ölansammlung am generatorseitigen Ende des Pitchrohrs vermieden werden kann.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage, mit einem einen Ölaufnahmeraum umschließenden Getriebegehäuse, mehreren um eine Drehachse A_{D} umlaufenden und miteinander antriebsverbundenen Planetenstufen, einem koaxial innerhalb der Planetenstufen angeordneten und mit einem Planetenträger der ersten Planetenstufe drehfest verbundenen Pitchrohr, wobei das Pitchrohr gegenüber einer Außenseite des Getriebegehäuses abgedichtet ist und zwischen dem Pitchrohr und jeweils den mehreren Planetenstufen ein Volumenbereich gebildet ist, wobei zumindest ein Teilabschnitt des Volumenbereichs gegenüber dem Ölaufnahmeraum abgedichtet ist.

Als Ölaufnahmeraum wird grundsätzlich der Innenraum des Getriebegehäuses bezeichnet, in dem keine Maschinenteile angeordnet sind und in dem entweder im Stillstand oder in einem der möglichen Betriebszustände sich Öl oder auch Ölnebel befinden kann.

Für den abzudichtenden Volumenbereich kann vorgesehen sein, dass dieser zumindest von einer Außenumfangsfläche des Pitchrohrs und einer jeweiligen Innenumfangsfläche der Sonnenräder der beiden Planetenstufen begrenzt wird. Eine Abdichtung zu den Seiten erfolgt durch den Planetenträger einerseits oder die Hohlwelle oder das Sonnenrad anderseits.

Der gegenüber dem Ölaufnahmeraum abgedichtete erste Teilabschnitt des Volumenbereichs ist zweckmäßigerweise der generatorseitige Abschnitt des Volumenbereichs. Hierdurch wird der Ort der möglichen Ölansammlung weiter in die Mitte des Getriebegehäuses verlegt, wo durch einfache Maßnahmen die Ölansammlung beseitigt oder zumindest reduziert werden kann oder sich eine fortwährende Durchmischung der Ölansammlung einstellt, so dass ein Verkochen nicht stattfinden kann.

Auf eine aufwändige, teure und fehleranfällige Ölabfuhrvorrichtung kann verzichtet werden. Das Pitchrohr hat im abgedichteten Bereich keinen Kontakt mehr zum Öl. Ein Austausch des Pitchrohres wird im Wartungsfall deutlich erleichtert und die elektrische Isolierung des Planetengetriebes zum Pitchrohr bzw. Generator ist deutlich leichter umzusetzen.

In einer zudem bevorzugten Ausgestaltung ist vorgesehen, dass der Teilabschnitt des Volumenbereichs über ein zwischen dem Sonnenrad der nachfolgenden Planetenstufe und dem Pitchrohr einsitzendes Dichtungselement gegenüber dem Ölaufnahmeraum abgedichtet ist. Hierdurch ist gewährleistet, dass ein Eindringen des Öls aus dem Ölaufnahmeraum in den Teilabschnitt des Volumenbereichs unterbunden wird oder zumindest auf ein Minimum reduziert wird. Insbesondere kann in konkreter Ausgestaltung vorgesehen sein, dass das Dichtungselement gegenüber dem Sonnenrad drehfest gehalten ist.

In einer zudem bevorzugten Ausgestaltung ist zumindest ein weiterer gegenüber dem Ölaufnahmeraum abgedichteter Teilabschnitt des Volumenbereichs vorgesehen, wobei die zumindest zwei Teilabschnitte untereinander unterschiedliche Außenradien aufweisen. Hierbei können die beiden Teilabschnitte in Summe den gesamten Volumenbereich ergeben. Hierbei kann einer der beiden Teilabschnitte in seiner axialen Ausdehnung mit der ersten Planetenstufe zumindest annähernd zusammenfallen und der andere Teilabschnitt kann in seiner axialen Ausdehnung zumindest annähernd mit der nachfolgenden Planetenstufe zusammenfallen. In einer möglichen konkreten Ausgestaltung ist der Volumenbereich, bestehend aus mindestens zwei Teilabschnitten, über ein zwischen einem Sonnenrad der ersten Planetenstufe und dem Sonnenrad der nachfolgenden Planetenstufe angeordnetes erstes Dichtungselement und über ein zwischen dem Sonnenrad und dem Planetenträger der ersten Planetenstufe angeordnetes zweites Dichtungselement gegenüber dem Ölaufnahmeraum abgedichtet.

In einer weiteren möglichen Ausgestaltung ist in dem Volumenbereich ein koaxial zu einem Sonnenrad der ersten Planetenstufe verlaufendes Hülsenelement angeordnet, wobei der Volumenbereich über ein zwischen dem Sonnenrad der zweiten Planetenstufe und dem Hülsenelement angeordnetes erstes Dichtungselement und über ein zwischen dem Planetenträger der ersten Planetenstufe und dem Hülsenelement angeordnetes zweites Dichtungselement abgedichtet ist. In praktischer Ausgestaltung kann vorgesehen sein, dass die beiden Dichtungselemente an dem Hülsenelement drehfest gehalten sind.

Die Aufgabe wird auch gelöst durch einen Antriebsstrang für eine Windkraftanlage zur drehmomentübertragenden Verbindung eines Rotors mit einem Generator, umfassend eine Hauptlagereinheit, eine in der Hauptlagereinheit gelagerte Hauptwelle, ein über die Hauptwelle angetriebenes Getriebe und einen mit dem Getriebe antriebsverbundenen Generator, wobei das Getriebe wie beschrieben ausgebildet ist. Hierbei ist ein Planetenträger der Planetenstufe mittelbar über die Hauptwelle gegenüber der Hauptlagereinheit gelagert und gegenüber dem Getriebegehäuse zentriert.

Die Aufgabe wird zudem gelöst durch eine Windkraftanlage, umfassend einen Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage in einer möglichen Ausführung,
Fig. 2: einen Querschnitt durch das Getriebe mit zwei Planetenstufen,
Fig. 3: eine schematische Darstellung einer herkömmlichen Anordnung und Abdichtung eines Pitchrohrs innerhalb der beiden Planetenstufen und
Fig. 4 bis 6: schematische Darstellungen möglicher Ausführungen einer Abdichtung des Volumenbereichs gegenüber dem Ölaufnahmeraum.

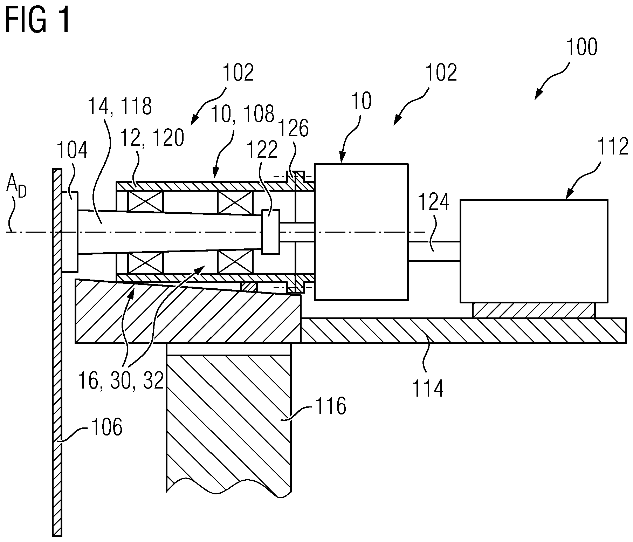

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Planetengetriebe 10 und einen Generator 112 umfasst. Über einen Maschinenträger 114 werden zumindest die Hauptlagereinheit 108 und der Generator 112 über einen Turm 116 gegenüber dem, nicht dargestellten, Boden abgestützt.

Die Hauptlagereinheit 108 umfasst eine Hauptwelle 118, die über eine Wälzlageranordnung 16 gegenüber einem Lagergehäuse 120 der Hauptlagereinheit 108 drehbar um eine Drehachse D gelagert ist. An einem Ende der Hauptwelle 118 ist der Rotorflansch 104 und an diesem der Rotor 106 gehalten. Das andere Ende der Hauptwelle 118 ist über eine Kupplung 122 antriebsmäßig mit dem Getriebe 10 verbunden, um ein von dem Rotor 106 aufgebrachtes Antriebsmoment in das Getriebe 10 einzuleiten. Das Getriebe 10 kann als Planetengetriebe mit einer oder mehreren Planetenstufen ausgeführt sein. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden.

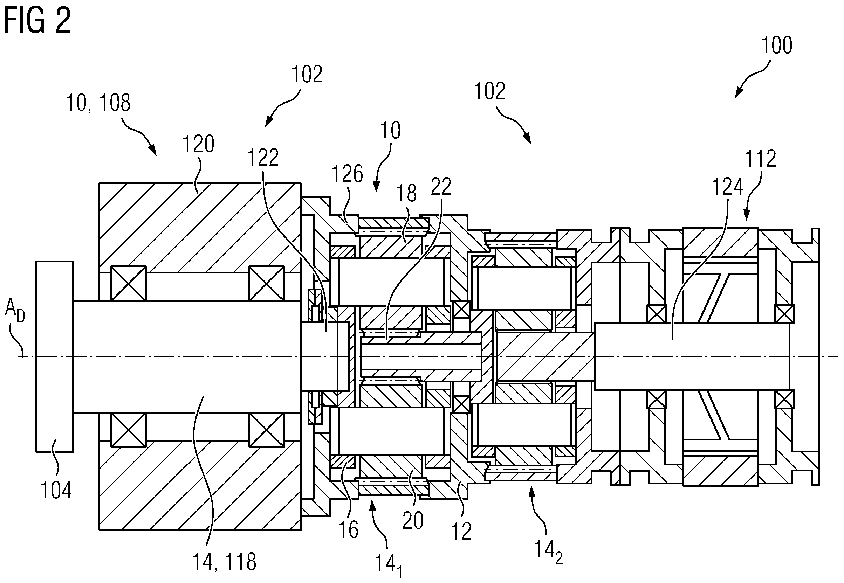

Die Figur 2 zeigt einen Querschnitt durch ein Planetengetriebe 10, das vorliegend mit zwei Planetenstufen 14₁, 14₂ ausgeführt ist. Das Planetengetriebe 10 umfasst das Getriebegehäuse 12, in dem die zwei Planetenstufen 14₁, 14₂ um eine Drehachse A_{D} umlaufen. Jede Planetenstufe 14₁, 14₂ weist einen Planetenträger 16 und ein Hohlrad 20 auf. Der Planetenträger 16 ist mittelbar mit dem Rotor 106 antriebsverbunden, wobei der Planetenträger 16 mehrere mit dem Planetenträger 16 umlaufend und wechselseitig mit dem Hohlrad 20 und einem Sonnenrad 22 in einem Verzahnungseingriff stehende Planetenrädern 18 aufweist. Das Sonnenrad 22 der ersten Planetenstufe 14₁ ist wiederum antriebsverbunden mit einem Planetenträger 16 der zweiten Planetenstufe 14₂, was vorliegend keiner weiteren Beschreibung bedarf. Nicht dargestellt in der Figur 2 ist ein koaxial innerhalb der beiden Planetenstufen 14₁, 14₂ angeordnetes und mit dem Planetenträger 16₁ der ersten Planetenstufe 14₁ drehfest verbundenes Pitchrohr. Dieses wird anhand der folgenden Figuren dargestellt und erläutert.

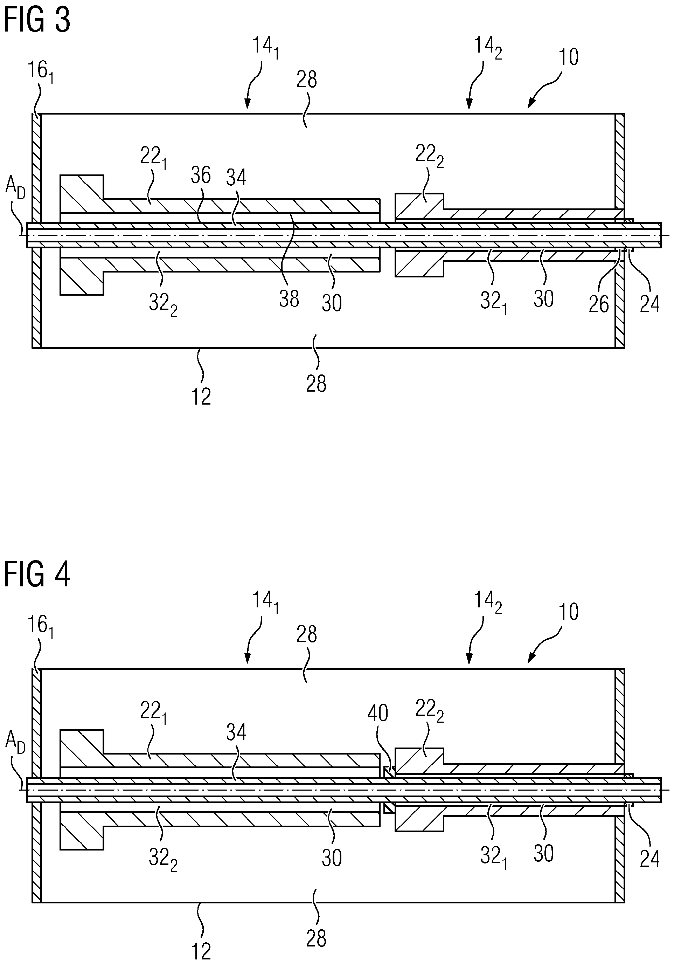

Die Figur 3 zeigt anhand einer rein schematischen Darstellung einer herkömmlichen Anordnung und Abdichtung ein innerhalb der beiden Planetenstufen 14₁, 14₂ angeordnetes Pitchrohr 34. Dargestellt ist der Planetenträger 16₁ der ersten Planetenstufe 14₁ und das Pitchrohr 34, die beide in dem Getriebegehäuse 12 in einer Betriebssituation mit einer Drehzahl n₁ umlaufen. Zu der ersten Planetenstufe 14₁ ist das Sonnenrad 22₁ gezeigt, das in einer Betriebssituation mit einer zweiten Drehzahl n₂ umläuft. Zu der zweiten Planetenstufe 14₂ ist lediglich das entsprechende Sonnenrad 22₂ gezeigt, das in einer Betriebssituation mit einer dritten Drehzahl n₃ umläuft. Das Getriebegehäuse 12 umschließt einen Ölaufnahmeraum 28, in dem beispielsweise ein vorgehaltenes Ölreservoir und insbesondere in einer Betriebssituation das sich bildende Spritzöl gehalten ist. Zusätzlich zu dem Ölaufnahmeraums 28 wird einen Volumenbereich 30 gebildet, der sich zwischen dem Pitchrohr 34 und jeweils den beiden Planetenstufen 14₁, 14₂ befindet. Der Volumenbereich 30 wird zumindest von einer Außenumfangsfläche 36 des Pitchrohrs 34 und einer jeweiligen Innenumfangsfläche 38 der Sonnenräder 22 der beiden Planetenstufen 14₁, 14₂ begrenzt.

Der Volumenbereich 30 kann wiederum in einen ersten Teilabschnitt 32₁, die sich zwischen dem Pitchrohr 34 und der zweiten Planetenstufe 14₂ befindet, und einen zweiten Teilabschnitt 32₂, der sich zwischen dem Pitchrohr 34 und der ersten Planetenstufe 14₁ befindet, unterteilt werden. Weitere oder andere Unterteilungen des Volumenbereichs 30 in Teilbereiche können vorgenommen werden, sofern zweckmäßig. Der erste Teilabschnitt 32₁ ist generatorseitig über ein Dichtungselement 50 zwischen dem Sonnenrad 22₂ der zweiten Planetenstufe 14₂ und dem Pitchrohr nach außen abgedichtet. Das Öl in dem Ölaufnahmeraum 28 kann in einem Betriebszustand ungehindert in den Volumenbereich 30 gelangen, insbesondere zwischen dem Planetenträger 16₁ und dem Sonnenrad 22₁ der ersten Planetenstufe 14₁ und diesem Sonnenrad 22₁ und dem Sonnenrad 22₂ der zweiten Planetenstufe 14₂. Infolge der bereits beschriebenen, aber hier nicht dargestellten, geneigte Einbaulage des Turmaufbaus, sammelt sich in Betriebszuständen das Öl in dem ersten Teilabschnitt 32₁, insbesondere vor dem Dichtungselement 50, da es von diesem zurückgehalten wird. Das vor dem Dichtungselement 24 sich ansammelnde Öl ist in der Figur 3 mit dem Bezugszeichen 26 bezeichnet, dient allerdings nur der Veranschaulichung.

Die Figur 4 zeigt eine erste Ausführung einer Abdichtung des Volumenbereichs 30 gegenüber dem Ölaufnahmeraum 28. Hierbei ist vorgesehen, dass der erste Teilabschnitt 32₁ des Volumenbereichs 30 über ein zwischen dem Sonnenrad 22 der zweiten Planetenstufe 14₂ und dem Pitchrohr 34 einsitzendes Dichtungselement 40 gegenüber dem Ölaufnahmeraum 28 abgedichtet ist. Das Dichtungselement 40 kann gegenüber dem Sonnenrad 22₂ drehfest gehalten sein, d.h. an diesem befestigt sein und mit der Drehzahl des Sonnenrades 22₂ umlaufen. Durch diese Positionierung des Dichtungselements 40 kann kein Öl mehr in den ersten Teilabschnitt 32₁ des Volumenbereichs 30 gelangen, so dass sich in einem Betriebszustand vor dem Dichtungselement 24 keine Ölansammlung bildet.

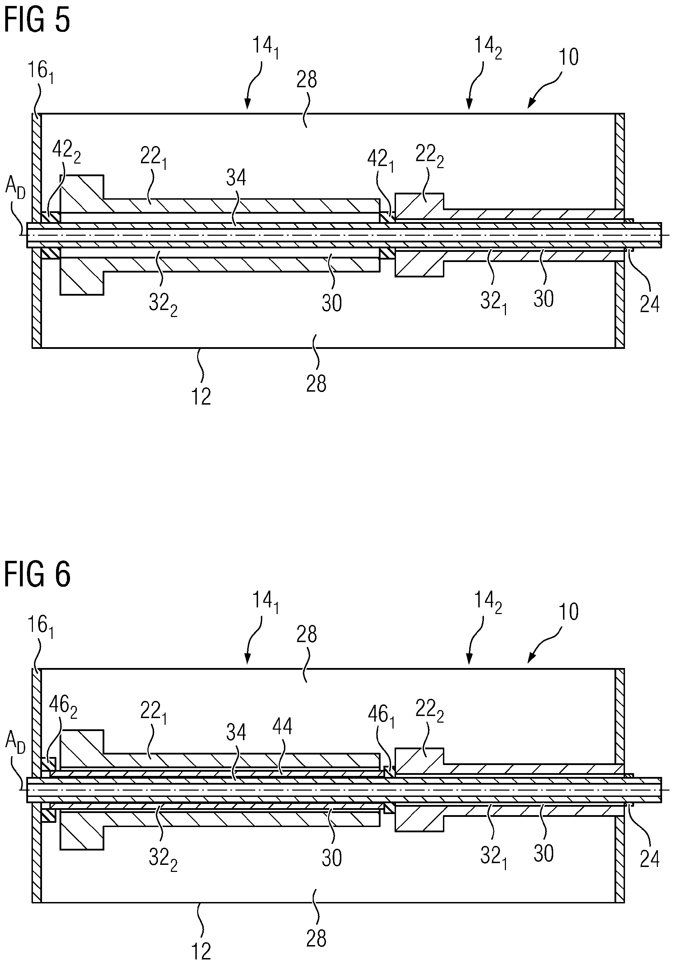

Die Figur 5 zeigt eine weitere Ausführung einer Abdichtung des Volumenbereichs 30 gegenüber dem Ölaufnahmeraum 28. Hierbei ist vorgesehen, dass der Volumenbereich 30 über ein zwischen dem Sonnenrad 22₁ der ersten Planetenstufe 14₁ und dem Sonnenrad 22₂ der zweiten Planetenstufe 14₂ angeordnetes erstes Dichtungselement 42₁ und über ein zwischen dem Sonnenrad 22₁ und dem Planetenträger 16 der ersten Planetenstufe 14₁ angeordnetes zweites Dichtungselement 42₂ gegenüber dem Ölaufnahmeraum 28 abgedichtet ist. Hiermit ist der gesamte Volumenbereich 30 gegenüber einem Öleintritt aus dem Ölaufnahmeraum 28 abgedichtet.

Die Figur 6 zeigt noch eine weitere Ausführung einer Abdichtung des Volumenbereichs 30 gegenüber dem Ölaufnahmeraum 28. Hierbei ist vorgesehen, dass in dem Volumenbereich 30 ein koaxial zu dem Sonnenrad 22₁ der ersten Planetenstufe 14₁ verlaufendes Hülsenelement 44 angeordnet ist, wobei der Volumenbereich 30 über ein zwischen dem Sonnenrad 22₁ der zweiten Planetenstufe 14₂ und dem Hülsenelement 44 angeordnetes erstes Dichtungselement 46₁ und über ein zwischen dem Planetenträger 16₁ der ersten Planetenstufe 14₁ und dem Hülsenelement 44 angeordnetes zweites Dichtungselement 46₂ abgedichtet ist. In einer alternativen, aber nicht gezeigten Ausgestaltung kann vorgesehen sein, dass das Hülsenelement 44koaxial innerhalb des Sonnenrades 22 zumindest einer weiteren oder aller Planetenstufen 14 angeordnet ist.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Dichtungselement
- 26: Ölansammlung
- 28: Ölaufnahmeraum
- 30: Volumenbereich
- 32: Teilabschnitt
- 34: Pitchrohr
- 36: Außenumfangsfläche
- 38: Innenumfangsfl äche
- 40: Dichtungselement
- 42: Dichtungselement
- 44: Hülsenelement
- 46: Dichtungselement
- 100: Windkraftanlage
- 102: Antriebstrang
- 104: Rotorflansch
- 106: Mehrblattrotor
- 108: Hauptlagereinheit
- 110: Getriebe
- 112: Generator
- 114: Maschinenträger
- 116: Turm
- 118: Hauptwelle
- 120: Lagergehäuse
- 122: Kupplung
- 124: Generatorwelle

## Patentansprüche

1. Planetengetriebe (10) für eine über einen Rotor (72) angetriebene Windkraftanlage (70), mit
einem Getriebegehäuse (12), wobei das Getriebegehäuse (12) einen Ölaufnahmeraum (28) umschließt,
mehreren um eine Drehachse A_{D} umlaufenden und miteinander antriebsverbundenen Planetenstufe (14₁, 14₂),
einem koaxial innerhalb der Planetenstufen (14₁, 14₂) angeordneten und mit einem Planetenträger (16₁) der ersten Planetenstufe (14₁) drehfest verbundenen Pitchrohr (34), wobei das Pitchrohr (34) gegenüber einer Außenseite des Getriebegehäuses (12) abgedichtet ist und zwischen dem Pitchrohr (34) und jeweils den mehreren Planetenstufen (14₁, 14₂) ein Volumenbereich (30) gebildet ist,
**dadurch gekennzeichnet, dass**
zumindest ein Teilabschnitt (32) des Volumenbereichs (30) gegenüber dem Ölaufnahmeraum (28) abgedichtet ist.

2. Planetengetriebe (10) nach Anspruch 1, **dadurch gekennzeichnet, dass** der Volumenbereich (30) zumindest von einer Außenumfangsfläche (36) des Pitchrohrs (34) und einer jeweiligen Innenumfangsfläche (38) der Sonnenräder (22) der mehreren Planetenstufen (14₁, 14₂) begrenzt wird.

3. Planetengetriebe (10) nach Anspruch 1 oder 2, **dadurch gekennzeichnet, dass** der Teilabschnitt (32₁) des Volumenbereichs (30) über ein zwischen dem Sonnenrad (22) der zweiten Planetenstufe (14₂) und dem Pitchrohr (34) einsitzendes Dichtungselement (40) gegenüber dem Ölaufnahmeraum (28) abgedichtet ist.

4. Planetengetriebe (10) nach Anspruch 3, **dadurch gekennzeichnet, dass** das Dichtungselement (40) gegenüber dem Sonnenrad (22) drehfest gehalten ist.

5. Planetengetriebe (10) nach einem der Ansprüche 1 bis 4, dass zumindest ein weiterer gegenüber dem Ölaufnahmeraum (28) abgedichteter Teilabschnitt (32₂) des Volumenbereichs (30) vorgesehen ist, wobei die zumindest zwei Teilabschnitte (32₁, 32₂) axial versetzt zueinander angeordnet sind, insbesondere axial aneinander anschließen.

6. Planetengetriebe (10) nach Anspruch 5, **dadurch gekennzeichnet, dass** der Volumenbereich (30) über ein zwischen einem Sonnenrad (22) der ersten Planetenstufe (14₁) und dem Sonnenrad (22) der zweiten Planetenstufe (14₂) angeordnetes erstes Dichtungselement (42₁) und über ein zwischen dem Sonnenrad (22) und dem Planetenträger (16) der ersten Planetenstufe (14₁) angeordnetes zweites Dichtungselement (42₂) gegenüber dem Ölaufnahmeraum (28) abgedichtet ist.

7. Planetengetriebe (10) nach einem der Ansprüche 1 bis 6, dass in dem Volumenbereich (30) ein koaxial zu dem Pitchrohr (34) verlaufendes Hülsenelement (44) angeordnet ist, wobei der Volumenbereich (30) über ein zwischen dem Sonnenrad (22) einer zweiten der mehreren Planetenstufen (14₂) und dem Hülsenelement (44) angeordnetes erstes Dichtungselement (46₁) und über ein zwischen dem Planetenträger (16) einer ersten der mehreren Planetenstufe (14₁) und dem Hülsenelement (44) angeordnetes zweites Dichtungselement (46₂) abgedichtet ist.

8. Planetengetriebe (10) nach Anspruch 7, **dadurch gekennzeichnet, dass** die beiden Dichtungselemente (46₁, 46₂) an dem Hülsenelement (44) drehfest gehalten sind.

9. Planetengetriebe (10) nach Anspruch 7 oder 8, **dadurch gekennzeichnet, dass** das Hülsenelement (44) koaxial innerhalb des Sonnenrades (22) einer ersten der mehreren Planetenstufen (14₁) angeordnet ist.

10. Planetengetriebe (10) nach Anspruch 9, **dadurch gekennzeichnet, dass** das Hülsenelement (44) koaxial innerhalb des Sonnenrades (22) zumindest einer weiteren der mehreren Planetenstufen (14) angeordnet ist.

11. Antriebsstrang (102) für eine Windkraftanlage (100) zur drehmomentübertragenden Verbindung eines Rotors (106) mit einem Generator (112), umfassend eine Hauptlagereinheit (108) und einer Hauptwelle (118) und ein über die Hauptwelle (118) angetriebenes Getriebe (10), **dadurch gekennzeichnet, dass** das Getriebe (10) als Planetengetriebe nach einem der vorangegangenen Ansprüche ausgebildet ist.

12. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 11 ausgebildet ist.
